Europäisches Patentamt

European Patent Office

Office européen des brevets

(11) Numéro de publication: **0 060 150**

**B1**

(12) **FASCICULE DE BREVET EUROPEEN**

(45) Date de publication du fascicule du brevet: **01.07.87**

(21) Numéro de dépôt: **82400113.5**

(22) Date de dépôt: **21.01.82**

(51) Int. Cl.⁴: **B 01 J 49/00,** C 02 F 1/42,
G 01 F 15/07

(54) **Système de commande du cycle de régénération contrôlé par un compteur dans un dispositif de conditionnement d'eau.**

(30) Priorité: **23.02.81 US 236993**

(43) Date de publication de la demande:
**15.09.82 Bulletin 82/37**

(45) Mention de la délivrance du brevet:
**01.07.87 Bulletin 87/27**

(84) Etats contractants désignés:
**AT BE CH DE GB IT LI LU NL SE**

(56) Documents cités:
**DE-A-1 935 034**
**FR-A-1 536 994**
**FR-A-1 559 141**
**FR-A-2 009 628**
**FR-A-2 085 441**
**FR-A-2 383 885**
**US-A-3 160 008**

(73) Titulaire: **L.W. FLECKENSTEIN, INC., Société dite**
**20580 Enterprise Avenue**
**Brookfield - Wisconsin 53005 (US)**

(72) Inventeur: **Fleckenstein, Andrew**
**2880 Santa Maria Dr.**
**Brookfield Wisconsin 53005 (US)**
Inventeur: **Mortl, Michael**
**2308 W. Rochelle Ave**
**Glendale Wisconsin 53209 (US)**

(74) Mandataire: **Loyer, Bertrand et al**
**Cabinet Pierre Loyer 18, rue de Mogador**
**F-75009 Paris (FR)**

Courier Press, Leamington Spa, England.

EP 0 060 150 B1

## Description

L'invention se rapporte aux dispositifs de conditionnement d'eau et concerne principalement un système de commande pour démarrer un cycle de régénération à un moment présélectionné après traitement d'un volume d'eau prédéterminé.

Jusqu'à présent, la plupart des dispositifs de conditionnement d'eau ont été réglés pour fournir des périodes de régénérations basées sur une période de temps fixe. De tels dispositifs incluent une roue de déclenchement réglée sur le nombre de jours désirés entre cycles de régénération, de sorte que le dispositif entraîne la régénération selon le programme prescrit indépendamment de la quantité d'eau utilisée entre les cycles de régénération. Si le dispositif était réglé pour un, deux ou trois jours, ou davantage, la période de régénération intervenait au même moment du même programme journalier selon le programme établi par la roue de déclenchement programmée quel que soit le volume d'eau consommee.

A certains moments, plus d'eau est utilisée que prévu et il en résulte que le dispositif fournit de l'eau dure avant que le cycle de régénération soit déclenché par le réglage de la roue programmée. A d'autres moments, moins d'eau est utilisée que prévu, mais le cycle de régénération intervient selon le programme établi, ayant pour conséquence de provoquer un cycle de régénération dans lequel le sel du réservoir de saumure est gaspillé et l'eau, et le lit de résine qui n'était que partiellement épuisée, sont régénérés sans nécessité. De tels arrangement sont illustrés et décrits dans les brevets Fleckenstein antérieurs US—A 3.457.792, 3.742.768 et 3.874.412. On a également décrit dans le brevet allemand 1.935.034 et dans le brevet français 2.085.441 des systèmes de commande d'adoucisseur d'eau qui permettent de démarrer le cycle de régénération à un moment prédéterminé, dès qu'une quantité d'eau déterminée s'est écoulée.

D'autres systèmes tels que ceux représentés aux brevets US—A 2.078.361, 2.310.978, 3.396.845, 3.509.998, 3.570.520 et 3.891.552 comportent un cycle de régénération déclenché après le traitement d'un volume d'eau prédéterminé. Ces systèmes, cependant, ne pouvaient pas contrôler le moment de la journée où la régénération devait intervenir puisque la régénération était contrôlée seulement par le volume d'eau traité. Dans certains de ces systèmes, le moment de la journée où la régénération intervenait était sans importance car deux réservoirs étaient utilisés, celui qui était en cours de régénération était mis hors circuit, l'autre réservoir fournissait l'eau traitée de façon continue. Evidemment un tel arrangement est beaucoup plus couteux et complexe que celui du demandeur tel qu'il est exposé ci-après. En outre, si un seul réservoir est utilisé, il devient important de démarrer la régénération à un moment où peu, ou aucune eau, n'est utilisée puisqu'une fois que le cycle de régénération commence, seule l'eau non traitée devient disponible. Le plus souvent la régénération est programmée pour intervenir tard dans la soirée, ou dans les premières heures le matin lorsque les occupants de l'immeuble sont endormis et qu'aucune eau n'est utilisée.

La présente invention procure un système de commande qui inclut une roue horaire, entraînée par un moteur électrique, et un compteur d'eau qui contrôle la consommation de l'eau traitée et entraîne une roue indicatrice du volume d'eau jusqu'à une position déclenchant la régénération seulement si la régénération est nécessaire, comme l'indique la consommation d'un volume d'eau prédéterminé. La roue horaire et la roue indicatrice du volume d'eau coopèrent pour mettre en fonction le mécanisme du cycle de régénération à un moment prédéterminé et seulement après qu'un volume d'eau prédéterminé soit passé dans le compteur. Des moyens sont prévus de façon à pouvoir modifier le moment de la journée auquel doit avoir lieu la régénération, ainsi que le volume d'eau consommée qui entraîne la régénération. Le compteur d'eau inclut une roue motrice et un train de pignons réducteurs qui entraînent un arbre ou un câble flexible afin d'entraîner mécaniquement la roue indicatrice du volume d'eau jusqu'à une position de démarrage de la régénération.

Les caractéristiques qui précèdent ainsi que d'autres, y compris des caractéristiques particulières de l'invention sont obtenues par la structure et l'arrangement illustrés dans les dessins annexés dans lesquels:

La figure 1 est une vue générale en élévation d'un système de conditionnement d'eau incorporant les commandes selon l'invention pour la régénération du système de conditionnement,

La figure 2 est la vue en élévation arrière du mécanisme de commande disposé dans la tête de commande,

La figure 3 est une vue de détail à plus grande échelle représentant les commandes au moyen desquelles le système peut être réglé pour sa mise en fonction,

La figure 4 est aussi une vue de détail des commandes apparaissant dans une autre position,

La figure 5 est une vue en coupe transversale le long de la ligne V—V de la figure 3 représentant les commandes et les engrenages d'entraînement,

La figure 6 est une vue éclatée en perspective des engrenages d'entraînement représentés dans les trois figures précédentes indiquant leurs positions relatives dans le système,

La figure 7 est une vue en coupe horizontale à travers le train réducteur du type à pignons utilisé dans le compteur d'eau pour le système de commande, et

La figure 8 une vue en coupe transversale le long de la ligne 8—8 de la figure 7 mais disposée de façon plus claire pour montrer la relation d'entraînement des engrenages comprenant le système réducteur.

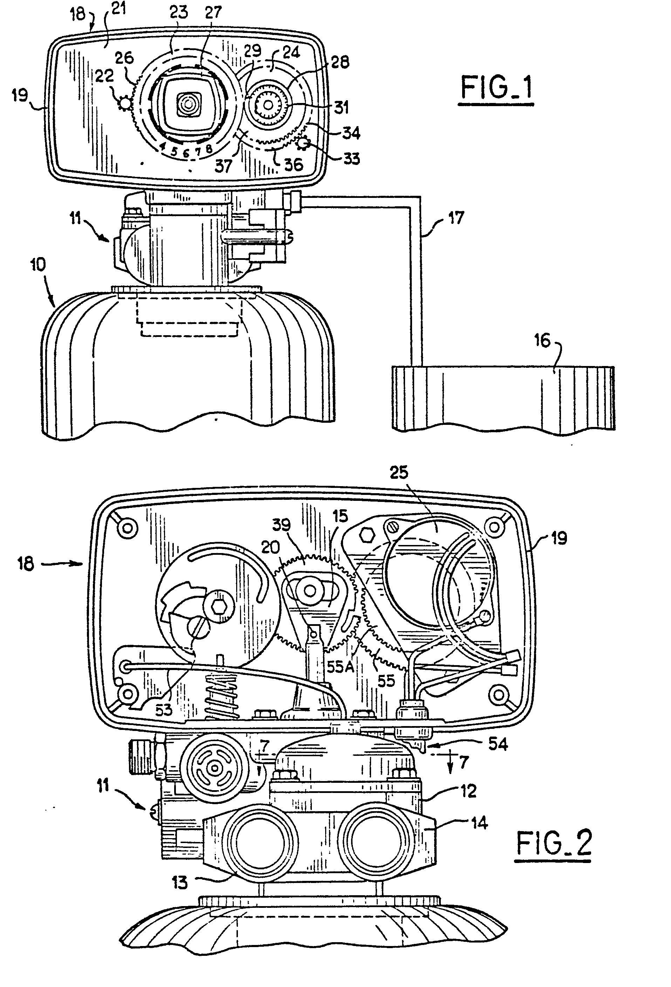

Ainsi qu'il est représenté à la figure 1, la référence numérique 10 désigne l'ensemble d'un réservoir adoucisseur d'eau typique comprenant une vanne 11 fixée à son sommet. Comme le montre la figure 2, la vanne de commande comporte un boitier 12 qui délimite une entrée 13 pour la réception de l'eau à traiter et une sortie 14 à travers laquelle s'écoule l'eau traitée. La vanne de commande est connectée à un réservoir de saumure 16 par un conduit 17 pour la régénération.

Un mécanisme de commande dont l'ensemble est désigné par 18 est fixé au sommet de la vanne, et est adapté pour entraîner, à des intervalles sélectionnés, le piston de la vanne par la tige 20, traversant la plaque 15, cette tige étant commandée par un mouvement alternatif lent et ininterrompu du cycle. Lorsque le piston se déplace, les divers passages de la vanne sont connectés pour commander les opérations successives de régénération telles que lavage intense, introduction de saumure, rinçage lent, rinçage rapide, remplissage du réservoir de saumure avant le retour du piston à sa position initiale, ces diverses opérations étant plus complètement décrites au brevet US—A 3.742.768.

Le mécanisme de commande 18 comprend un boitier 19, de préférence en plastique résistant. Le boitier supporte une plaque frontale 21 qui peut porter les instructions relatives au fonctionnement sur les surfaces les plus périphériques. Un pignon d'entraînement 22, représenté figure 1, est disposé en retrait de la plaque frontale 21 et est entraîné par un moteur 25 de distribution horaire représenté figure 2. Le moteur 25 entraîne les pignons 55 et 55A. Une roue horaire 23 et une roue indicatrice du volume d'eau 24 sont aussi disposées en retrait de la plaque frontale 21. La roue horaire 23 porte un ensemble de dents 26 sur sa périphérie extérieure qui est adaptée pour engrener avec le pignon denté 22 et être entraînée par celui-ci. Le pignon 22 peut être monté pour pouvoir se déplacer axialement afin de se dégager des dents d'engrenage de la roue horaire et permettre ainsi le "réglage" de la roue horaire au temps correct. La roue horaire comporte aussi sur sa surface externe des graduations de position pour représenter les heures de la journée de midi à 11 heures du soir, les indications P.A et A.M étant marquées pour une lecture aisée. Un bouton manuel 27 de régénération est prévu pour effectuer une régénération manuelle du système si on le désire.

La roue 24 indicatrice des volumes d'eau comprend un bouton annulaire 28 rotatif, porteur d'une flèche 29 ou autres marques d'index directement portées sur la face frontale, et un sélecteur interne du volume d'eau 31 porteur de marques indiquant les valeurs du volume d'eau traitée d'environ 750 à 7 950 litres. Une autre solution consiste à porter comme marques indicatrices sur le bouton rotatif, le nombre de personnes habitant l'immeuble et à porter sur le sélecteur intérieur 31 le degré de dureté de l'eau à traiter. Le bouton externe 28 peut tourner par rapport au sélecteur 31 du volume d'eau de façon à choisir ou modifier le volume d'eau prédéterminé à traiter avant la commande de régénération en fonction de la capacité de l'ensemble. Lorsque le volume d'eau traitée, requis pour démarrer la régénération a été sélectionné, le sélecteur 31 et le bouton 28 sont fixés l'un à l'autre pour tourner ensemble au moyen d'une goupille non représentée.

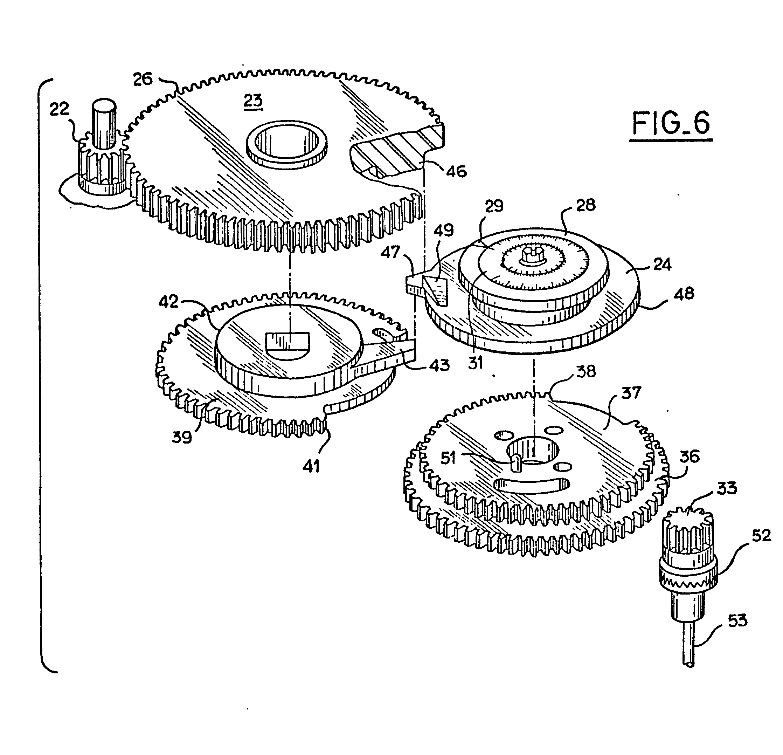

Le pignon d'entraînement 33 représenté s'étend de la plaque frontale 21 en s'engageant avec les dents 34 de la périphérie extérieure du pignon 36. Ainsi qu'on le voit mieux figure 6, le pignon 37 denté sur un secteur est de moindre diamètre que le pignon 36 adjacent à celui-ci et tourne avec lui. Il porte un ensemble de dents 38 sur une portion de sa périphérie externe. Les pignons 36 et 37 peuvent être formés d'une seule pièce si on le désire.

Le mécanisme de commande inclut aussi un pignon 39 à secteur denté, délimitant un ensemble de dents 41 qui s'étendent autour d'une portion de la périphérie du pignon et qui sont adaptées pour entrer en contact en s'engageant avec les dents 38 du pignon 37. Un bossage annulaire 42 s'étend de la face du pignon 39 vers le haut. Un bras de commande 43 s'étend pratiquement radialement du bossage 42. Une saillie 46 s'étendant vers le bas fait partie de la face inférieure de la roue 23.

Un doigt de déclenchement 47 s'étend radialement vers l'extérieur de la surface annulaire 48 formée sur la roue indicatrice 24 du volume d'eau. Une saillie en pente 49 s'étend de la roue 24 vers le haut et est adjacente au doigt de déclenchement 47. Un tenon 51 s'étend du pignon 37 vers le haut et pénètre dans une ouverture 51A de la surface inférieure du sélecteur 31 du volume d'eau afin de verrouiller les pignons 36, 37 et le sélecteur de volume 31 en vue d'assurer leur rotation commune. Un dispositif ressort, non représenté, est prévu pour solliciter de façon élastique la roue indicatrice de volume d'eau 24 vers le bas au dessus du pignon 37. Lorsqu'un changement du volume d'eau traitée, nécessaire pour entraîner la régénération est désiré, le bouton 28 est tiré manuellement vers le haut à l'encontre de la force élastique et est déplacé en le tournant jusqu'à ce que la flèche 29 ou toute autre marque soit alignée avec l'indication appropriée. L'indicateur de volume 31 ne tourne pas en raison de sa connexion avec le tenon 51.

Un dispositif d'embrayage 52, représenté figure 6, entre un arbre tournant flexible 53 et le pignon d'entraînement 33 permet le débrayage au cours d'un cycle manuel de régénération ou de l'arrêt. Le dispositif représenté est du type à rochet mais tout autre dispositif d'embrayage: rotatif à friction, magnétique, hydraulique ou à ressort, peut convenir.

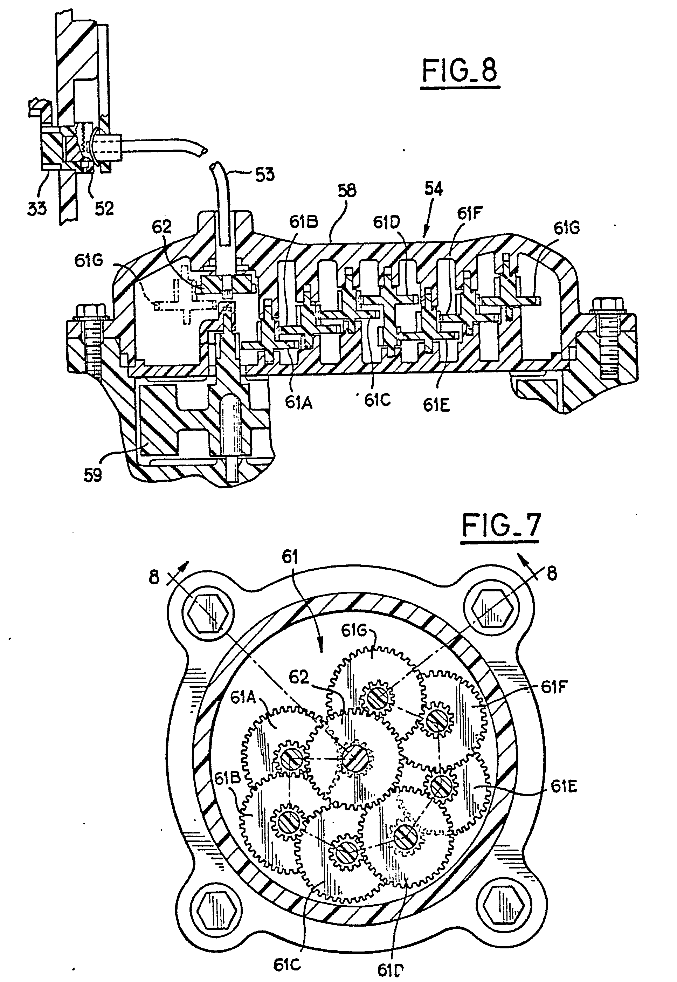

Les figures 7 et 8 représentent à titre d'exemple un compteur d'eau, désigné par la référence 54. Il comporte un boitier 58 et une roue motrice 59 qui est disposée dans le passage du flux d'arrivée d'eau à traiter. La roue 59 est ici représentée à la sortie du fluide, mais elle serait tout aussi efficace si elle était associée à l'entrée ou encore à tout autre endroit, dès l'instant que la roue est disposée pour commander avec exactitude le volume d'eau réel passant par l'adoucisseur d'eau.

Le train de pignons 61 représenté est entraîné par la roue motrice, et connecté pour entraîner le pignon 62 connecté à l'arbre flexible 53, lequel est connecté à son tour par l'embrayage 52 au pignon d'entraînement 33. Le train de pignons 61 forme un ensemble de pignons réducteurs standard qui comporte les pignons 61A, 61B, 61C, 61D, 61E, 61F, 61G et 62.

Le fonctionnement du dispositif de régénération contrôlé par le compteur est le suivant.

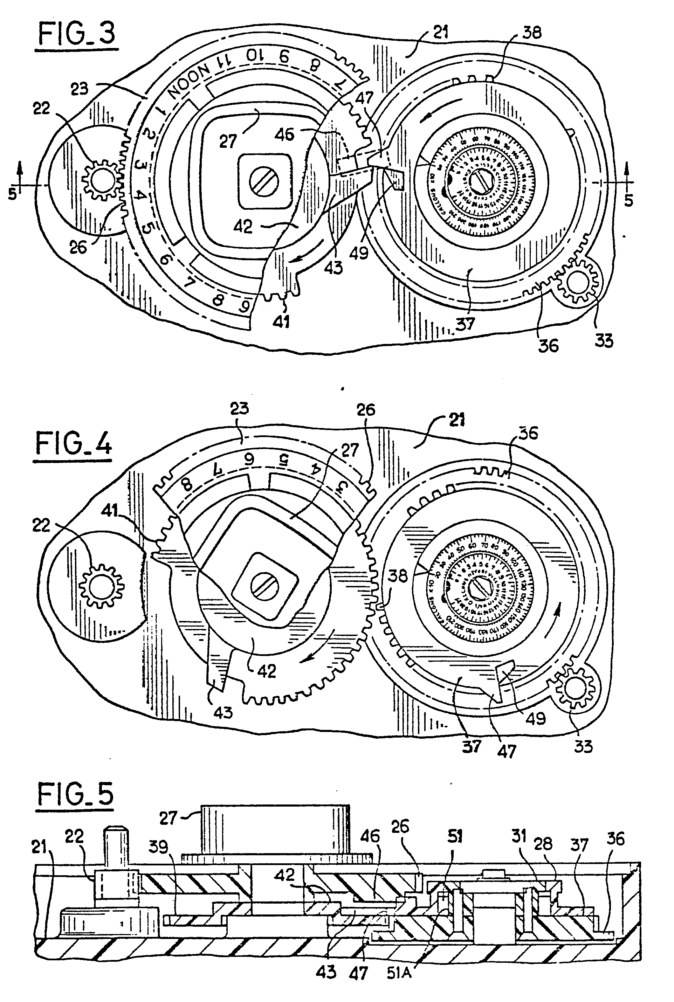

L'eau à traiter s'écoule par l'entrée 13 et l'eau traitée sort par l'orifice 14 en entraînant la roue motrice 59 qui tourne en raison directe du débit d'eau. Cette rotation est transmise par le train de pignons 61 (61A à G) jusqu'au pignon de sortie 62. Le pignon de sortie 62 fait tourner le pignon d'entraînement 33, au moyen du câble flexible 53 connecté au dispositif d'embrayage 52, à un rapport constant de litres par tour. Le pignon d'entraînement 33 fait tourner la roue indicatrice du volume d'eau 24 dans le sens des aiguilles d'une montre comme représenté aux figures 3 et 4, et la roue 24 continue de tourner très lentement aussi longtemps que l'eau traverse le compteur 54.

Comme représenté figure 3, lorsque le volume prédéterminé d'eau a été traitée, le doigt de déclenchement 47 a pris une position l'amenant en contact avec le bras de démarrage 43. La roue du volume d'eau cesse de tourner en raison du dispositif d'embrayage 52 qui permet au câble flexible 53 de tourner librement. La roue du volume d'eau 24 reste en position de repos jusqu'à un moment prédéterminé de la journée correspondant au temps de régénération. A ce moment la saillie 46 entre en contact avec la saillie en pente 49 et entraîne sa rotation. Cette rotation déplace le doigt de déclenchement 47 qui imprime une force de rotation au bras 43 de démarrage qui amène le pignon d'entraînement du piston 39 en prise avec le pignon d'entraînement 55A. Le moteur entraîne alors le déroulement du cycle de régénération.

Bien que le cycle de régénération se déroule, le secteur denté 39 tourne aussi et ses dents 41 viennent en prise avec les dents 38 du pignon 37. Cet engrenage entraîne la rotation de la roue de volume d'eau 24 jusqu'à ce que les dents des pignons 38 et 39 lachent prise en raison des dents manquantes du pignon 37. Ce processus est une caractéristique de la remise automatique à l'état initial du dispositif.

On doit noter qu'au cours de la restauration de la position de la roue du volume d'eau 24, le pignon d'entraînement 23 doit avoir tourné. Ceci est rendu possible par le dispositif d'embrayage 52. La position du secteur non denté du pignon 37 par rapport au doigt de déclenchement 47 est réglable pour obtenir le volume d'eau requis pour une installation donnée.

On doit aussi noter que dans le mode de réalisation préféré décrit, la coopération entre la roue du volume d'eau et la roue horaire est obtenue par une connexion mécanique directe. Il est possible d'utiliser d'autres formes de réalisation selon l'invention où la coopération entre la roue du volume d'eau et la roue horaire est obtenue par une connexion indirecte dont le dessin est plus complexe. De tels dispositifs entrent evidemment dans le cadre de la présente invention.

## Revendications

1. Système de commande du cycle de régénération d'un dispositif de conditionnement d'eau ayant une entrée (13) pour la réception de l'eau à traiter et une sortie (14) pour la fourniture de l'eau traitée, ledit système de commande incluant un mécanisme (39, 15) de commande du cycle de régénération, une roue horaire (23) entraînée par moteur (25) et réglable pour la commande de la régénération à un moment déterminé du jour, un compteur d'eau (54) disposé pour être en communication constante soit avec ladite entrée d'eau, soit avec ladite sortie d'eau et pour être entraîné continuellement par le passage de l'eau à travers ledit compteur, ledit système étant caractérisé en ce qu'il comporte une roue (24) indicatrice du volume d'eau et entraînée de façon mécanique et constante par ledit compteur d'eau (54) de telle façon que ladite roue (24) du volume d'eau tourne jusqu'à une position de mise en fonction lors du passage d'un volume d'eau prédéterminé par ledit compteur au cours de son fonctionnement continu, de façon à coopérer avec ladite roue horaire (23) à un moment prédéterminé de telle sorte que la régénération a lieu immédiatement après le traitement d'un volume d'eau prédéterminé mais ne débute seulement qu'à un moment prédéterminé du jour.

2. Système de commande tel que revendiqué en 1 incluant des moyens (28) associés à ladite roue indicatrice du volume d'eau (24) pour modifier le volume d'eau prédéterminé qui entraîne en rotation la roue indicatrice du volume d'eau jusqu'à sa position de mise en fonction.

3. Système de commande tel que revendiqué en 1 dans lequel des moyens (52) sont incorporés de telle sorte que le mécanisme du cycle de régénération peut aussi être actionné manuellement.

4. Système de commande tel que revendiqué en 1 incluant des moyens (22) associés à ladite roue horaire (23) pour modifier sélectivement le moment du jour où la régénération doit avoir lieu.

5. Système de commande tel que revendiqué en 1 incluant des moyens (37) pour rétablir automatiquement la position initiale de la roue indicatrice du volume d'eau (24) au cours du processus de régénération.

6. Système de commande tel que revendiqué en 1 incluant une pièce d'entraînement flexible (53) entre ledit compteur d'eau (54) et ladite roue indicatrice du volume d'eau (24).

7. Système de commande tel que revendiqué en 1 incluant un embrayage (52) disposé entre ledit compteur d'eau (54) et ladite roue (24) indicatrice du volume d'eau de façon à permettre à ladite roue indicatrice (24) du volume d'eau de rester inactive après avoir atteint sa position de mise en fonction.

## Patentansprüche

1. Regenerationszyklus-Steuerungssystem einer Wasseraufbereitungsvorrichtung, umfassend einen Einlaß (13) für die Aufnahme des aufzubereitenden Wassers und einen Auslaß (14) für die Abgabe des aufbereiteten Wassers, wobie das Steuerungssystem einen Steuerungsmechanismus (39, 15) für den Regenerationszyklus, ein durch einen Motor (25) angetriebenes und zur Steuerung der Regeneration auf einen bestimmten Zeitpunkt des Tages einstellbares Zeitschalterrad (23) und einen Wasserzähler (54) umfaßt, der derart angeordnet ist, daß er entweder mit dem Wassereinlaß oder mit dem Wasserauslaß ständig in Verbindung steht und daß er durch den Durchfluß des Wassers durch den Zähler ständig angetrieben wird, wobei das System dadurch gekennzeichnet ist, daß es ein Anzeigerad für das Wasservolumen (24) umfaßt, das derart mechanisch und ständig von dem Wasserzähler (54) angetrieben wird, daß das Rad für das Wasservolumen (24) sich bei Durchfluß eines durch den Zähler im Laufe seines Dauerbetriebes vorherbestimmten Wasservolumens bis zu einer Inbetriebnahme-Stellung so dreht, daß es zu einem vorherbestimmten Zeitpunkt mit dem Zeitschalterrad (23) derart zusammenwirkt, daß die Regeneration unmittelbar nach der Aufbereitung eines vorherbestimmten Wasservolumens erfolgt, jedoch nur zu einem vorherbestimmten Zeitpunkt des Tages beginnt.

2. Steuerungssystem nach Anspruch 1, das Mittel (28) umfaßt, die mit dem Anzeigerad für das Wasservolumen (24) verbunden sind, um das vorherbestimmte Wasservolumen zu verändern, das das Anzeigerad für das Wasservolumen bis zu seiner Inbetriebnahme-Stellung durch Rotation antreibt.

3. Steuerungssystem nach Anspruch 1, bei dem Mittel (52) derart vorgesehen sind, daß der Mechanismus für den Regenerationszyklus auch von Hand aus betätigt werden kann.

4. Steuerungssystem nach Anspruch 1, das Mittel (22) umfaßt, die mit dem Zeitschalterrad (23) verbunden sind, um den Zeitpunkt des Tages, zu dem die Regeneration stattfinden soll, selektiv verändern zu können.

5. Steuerungssystem nach Anspruch 1, das Mittel (37) umfaßt, um das Anzeigerad für das Wasservolumen (24) im Verlauf des Regenerationsprozesses wieder automatisch in die Ausgangsstellung zu bringen.

6. Steuerungssystem nach Anspruch 1, das ein biegsames Antriebsstück (53) zwischen dem Wasserzähler (54) und dem Anzeigerad für das Wasservolumen (24) umfaßt.

7. Steuerungssystem nach Anspruch 1, das eine Kupplung (52) umfaßt, die zwischen dem Wasserzähler (54) und dem Anzeigerad für das Wasservolumen (24) derart angeordnet ist, daß sie ein Außer-Kraft-Setzen des Anzeigerades für das Wasservolumen (24) ermöglicht, nachdem dieses seine Inbetriebnahme-Stellung erreicht hat.

## Claims

1. A control system for the regeneration cycle of a water conditioning system having an input (13) for the reception of the water to be treated and an output (14) for the supply of the treated water, said control system including a mechanism (39, 15) for controlling the regeneration cycle, a twenty four hour time dial (23) driven by a motor (25) and settable for the regeneration control at a determined moment of the day, a water meter (54) arranged so as to be in constant communication either with said water input or with said water output and so as to be driven continuously by the passage of water through said meter, said system being characterized in that it includes a wheel (24) indicating the volume of water and driven mechanically and in a constant manner by said water meter (54) in such manner that said water volume wheel (24) rotates to a position where it is set in function during the passage of a predetermined water volume through said meter while it is continuously operating, so as to cooperate with said twenty four hour time dial (23) at a predetermined moment so that the regeneration takes place immediately after the treatment of a predetermined volume of water, but starts only at a predetermined moment of the day.

2. A control system as set forth in claim 1, including means (28) associated with said water volume indicating wheel (24) in order to modify the predetermined water volume which drives the water volume indicating wheel in rotation up to the position where it is set in function.

3. A control system as set forth in claim 1, in which means (52) are incorporated in such manner that the regeneration cycle mechanism can also be actuated manually.

4. A control system as set forth in claim 1, including means (22) associated with said twenty four time dial (23) for modifying selectively the moment of day where the regeneration has to take place.

5. A control system as set forth in claim 1, including means (37) for reestablishing automatically the initial position of the water volume indicating wheel (24) during the regeneration process.

6. A control system as set forth in claim 1, including a flexible driving element (53) between said water meter (54) and said water volume indicating wheel (24).

7. A control system as set forth in claim 1, including a clutch (52) placed between said water meter (54) and said water volume indicating wheel (24) in such manner as to allow said water volume indicating wheel (24) remaining inactive after having reached the position where it is set in function.

FIG_1

FIG_2

FIG_3

FIG_4

FIG_5

FIG. 6

0 060 150

0 060 150

## FIG_8

## FIG_7

4